(19) Europäisches Patentamt

European Patent Office

Office européen des brevets

(11) Publication number: **0 443 763 B1**

(12) **EUROPEAN PATENT SPECIFICATION**

(45) Date of publication of patent specification: **07.06.95** (51) Int. Cl.6: **A23C 11/00**, A23C 21/00

(21) Application number: **91301121.9**

(22) Date of filing: **12.02.91**

(54) **Formulated milk for infants analogous to human milk.**

(30) Priority: **19.02.90 JP 36118/90**

(43) Date of publication of application:
**28.08.91 Bulletin 91/35**

(45) Publication of the grant of the patent:
**07.06.95 Bulletin 95/23**

(84) Designated Contracting States:
**DE FR GB NL**

(56) References cited:
**CH-A- 503 466**

**PATENT ABSTRACTS OF JAPAN vol. 11, no. 290 (C-447)(2237), 18 September 1987;& JP - A - 6283843 (MEIJI MILK PROD CO LTD) 17.04.1987**

**PATENT ABSTRACTS OF JAPAN vol. 12, no. 252 (C-512)(3099), 15 July 1988; & JP - A - 6339545 (MEIJI MILK PROD CO LTD) 20.02.1988**

**PATENT ABSTRACTS OF JAPAN vol. 9, no. 184 (C-294)(1907), 30 July 1985; & JP - A - 6054637 (MEIJI NIYUUGIYOU K.K.) 29.03.1985**

(73) Proprietor: **MEIJI MILK PRODUCTS COMPANY LIMITED**
**3-6, Kyobashi 2-chome**
**Chuo-ku**
**Tokyo 104 (JP)**

(72) Inventor: **Kuwata, Tamotsu**
**963-9, Yamaguchi**
**Tokorozawa-shi,**
**Saitama-ken (JP)**
Inventor: **Kaneko, Tetsuo**
**276-19, Ooaza Shinko**
**Iruma-shi,**
**Saitama-ken (JP)**
Inventor: **Kojima, Tadashi**
**4-15-4 Mukouhara**
**Higashiyamato-shi,**
**Tokyo (JP)**
Inventor: **Kobayashi, Toshitaka**
**655-46, Uenodai, Ogose-cho**
**Iruma-gun,**
**Saitama-ken (JP)**
Inventor: **Yamamoto, Yoshiro**
**2-14-12, Hon-cho**
**Higashimurayama-shi,**
**Tokyo (JP)**

(74) Representative: **Ede, Eric et al
Fitzpatricks,
4 West Regent Street
Glasgow G2 1RS,
Scotland (GB)**

**Description**

FIELD OF THE INVENTION

The present invention relates to formulated milk compositions for infants analogous to human milk and more particularly, to formulated milk compositions for infants analogous to human milk especially in nitrogen sources.

DESCRIPTION OF THE PRIOR ART

Formulated milk for infants represented by formulated milk powder has been widely utilized as synthetic nutrient food for infants instead of bovine milk. This formulated milk for infants is mainly composed of bovine milk; in order to render its composition as close as possible to that of human milk, various improvements have been made on components such as protein, sugar, lipid, mineral, vitamin, etc. Among these improvements, it is general for an improved composition of protein to adjust a ratio of casein to whey proteins to approximately 40 : 60, which is the ratio in human milk, by increasing the proportion of whey proteins in preparation of formulated milk for infants analogous to human milk using bovine milk protein as a base.

However, there are a lot of caseins and whey proteins and a difference in quality is seen between human milk and bovine milk. That is, casein from bovine milk is not a single protein but consists mainly of $\alpha_s$ casein, $\beta$ casein and $x$ casein. On the other hand, $\alpha_s$ casein is not present but components similar to $\beta$ casein and $x$ casein of bovine milk casein are contained, in casein of human milk.

With respect to whey proteins, $\beta$-lactoglobulin which is scarcely present in human milk is contained in bovine milk in large quantities, and sometimes acts on some infants as a strong allergen. In Table 1, amounts of the respective components in bovine milk and human milk are shown.

Table 1

| Property of protein in human milk and bovine milk (by Hambraeus et al.) | | |
|---|---|---|
| | Human Milk (g/l) | Bovine Milk (g/l) |
| Casein | 2.5 | 27.3 |
| Whey protein | 6.4 | 5.8 |
| $\alpha$-Lactalbumin | 2.6 | 1.1 |
| Lactoferrin | 1.7 | trace |
| $\beta$-Lactoglobulin | - | 3.6 |
| Lysozyme | 0.5 | trace |
| Serum albumin | 0.5 | 0.4 |
| Immunoglobulin A | 1.0 | 0.03 |
| Immunoglobulin G | 0.03 | 0.6 |
| Immunoglobulin M | 0.02 | 0.03 |

As is clear from Table 1, human milk lacks $\beta$-lactoglobulin but bovine milk contains 3.6 g/l of $\beta$-lactoglobulin.

A method for removing $\alpha_s$ casein from bovine milk casein and a method for removing $\beta$-lactoglobulin from bovine milk whey proteins have been reported heretofore by many researchers.

As known techniques for fractionating casein into the respective components, for example, the following methods are known.

1. Urea method [N.J. Hipp et al., J. Dairy Sci., 35, 272 (1952)]

This is a method utilizing a difference in solubility between casein components in a urea solution. After a solution of casein in 6.6 M urea is prepared, water is added to the solution to adjust the urea concentration to 4.63 M, whereby $\alpha$ casein is predominantly precipitated. Next, water is added to the filtrate to adjust the urea concentration to 1.7 M, whereby $\beta$ casein is mainly precipitated. When ammonium sulfate is further added to the filtrate in a concentration of 1.6 M, $x$ casein is precipitated.

2. Alcohol precipitation method [N.J. Hipp et al., J. Dairy Sci., 35, 272 (1952)]

This is a method for fractional precipitation of the respective components of casein using the combination of precipitation from 50% alcohol solution of casein by changing temperature, pH and ionic intensity and isoelectric point precipitation from an aqueous solution.

3. Molecular sieve method [S. Nakai et al., J. Dairy Sci., 55, 30 (1972)]

This is a method for fractionating a solution of casein in urea using gel filtration carrier such as Sephadex G-100, etc.

4. Calcium precipitation method (Japanese Patent Application Laid-Open Nos. 59-91849 and 54-95768, Japanese Patent Publication No. 46-41573)

This is a method for fractionation of $\alpha_s$ casein which comprises adding divalent cations such as calcium, etc. to a casein solution.

For isolating and removing $\beta$-lactoglobulin from bovine milk whey, the following techniques are known.

1. Coprecipitation methods by high molecular polyvalent electrolytes [J. Hidalgo et al., J. Dairy Sci., 54, 1270 (1970) and N. Melachouris, J. Agr. Food Chem., 20, 798 (1972)]

These methods comprise adjusting the concentration of the added high molecular polyvalent electrolytes and pH thereby to coprecipitate with and isolate $\beta$-lactoglobulin, without reacting with $\alpha$-lactalbumin.

2. Salting-out method [J. McD. Armstrong et al., Biochemica et Biophysica Acta, 147, 60 (1967)]

According to this method, when salts are added to bovine milk whey, $\alpha$-lactalbumin precipitates but $\beta$-lactoglobulin is still dissolved, in ammonium sulfate concentration of about 27% at pH 3.5, due to different solubility in $\alpha$-lactalbumin and $\beta$-lactoglobulin. By filtration or centrifugation, these whey proteins are separated from each other.

3. Molecular sieve fractionation method [A. Ljunquist et al., Preparative Biochemistry, 5, 131 (1975)]

According to this method, fractionation is effected by gel filtration or ultrafiltration utilizing a difference in molecular weight. For example, by treating whey proteins with a membrane of which the mean fractional molecular weight is about 25,000, $\beta$-lactoglobulin is concentrated and $\alpha$-lactalbumin is filtered and separated.

4. Temperature treatment separation method [R.J. Pearce, Aust. J. Dairy Technol., Dec. 144 (1983)]

This method utilizes the property that when heated at a temperature above 55 ° C in the pH range of 4.2 to 4.6, $\alpha$-lactalbumin aggregates much more than $\beta$-lactoglobulin does.

5. Ion exchange chromatography method [Paul J. Skudder, Chemistry and Industry J., 7, 810 (1983) and Japanese Patent Publication No. 1-31865]

According to these methods, whey proteins are passed through a layer of diethylaminoethyl cellulose or carboxymethyl cellulose ion exchanger which is capable of adsorbing protein by an electrostatic force. Next, this adsorbed protein is eluted and developed by an appropriate salt density gradient or pH gradient to separately collect $\alpha$-lactalbumin and $\beta$-lactoglobulin.

6. Method for isoelectric point separation [C.H. Amundson, Whey Product Conference, Oct. 21-22 (1980)]

In general, protein has many polar groups in its molecule and its solubility becomes smallest at a pH value of its isoelectric point. In this case, where salt is present in the solution, its anions and cations bind to the polar groups of the protein to affect its solubility. In the case of whey proteins, the pH of the isoelectric point is about 4.5 in both $\alpha$-lactalbumin and $\beta$-lactoglobulin. By adjusting the salt concentration or dissolution temperature at this pH, the two proteins can be separated from each other.

4

In preparing formulated milk for infants using bovine milk protein, it has been attempted to formulate the composition as close to that of human milk as possible by reducing $\alpha_s$ casein and $\beta$-lactoglobulin, which are foreign proteins to human and might cause allergic response as described above, and further increasing whey protein. For example, Japanese Patent Application Laid-Open No. 62-83843 discloses the preparation of milk for infant rearing similar to mother's milk by adding a prepared matter obtained by reducing $\beta$-lactoblobulin from whey or whey protein concentrate to other components; the prepared infant milk has a $\beta$-lactoglobulin content $\leqq$ 15 wt % of all protein contained.

For improving conventional formulated milk in terms of protein, however, attention has been primarily brought only to casein and whey proteins and hence, a ratio of bovine milk casein to whey protein formulated is simply made to close to that of human milk by increasing whey protein; the improvement has not yet been made on protein quality.

PROBLEM TO BE SOLVED BY THE INVENTION

In general, it is well recognized that bovine milk contains up to 5 to 6% of non-protein nitrogen components other than protein. It is also recognized that the non-protein nitrogen components include extremely a variety of nitrogen compounds including nitrogen-containing compounds such as carnitine, creatinine, urea, phosphoethanolamine, etc.; amino acids such as glutamic acid, glycine, alanine, valine, leucine, etc.; nucleic acid-associated substances such as orotic acid, 5' CMP (cytidine-5'-monophosphate), 5' AMP (adenosine-5'-minophosphate), 5' GMP (guanosine-5'-monophoshate), 5' UMP (uridine-5'-monophosphate), etc.

These non-protein nitrogen components have been heretofore isolated and removed as impurities when lactose is isolated and prepared from whey. In most cases, these components have been discarded.

Further in conventional formulated milk for infants of so called whey protein potentiated type, desalted whey protein and bovine milk protein are used as nitrogen sources. However, the content of non-protein nitrogen is at best 60% of human milk, generally less than 60%.

That is, the non-protein nitrogen components amount to 18 to 30% of the nitrogen components in human milk. By increasing whey protein, the non-protein nitrogen content in the formulated milk for infants analogous to human milk is currently increasing some or less but, in general, the components are considerably lower than in human milk and amount merely to about 30 to about 50% of human milk.

MEANS TO SOLVE THE PROBLEM

The present invention has been made to solve all of the foregoing defects in the prior art with respect to nitrogen sources in the formulated milk for infants. That is, an object of the present invention is to make the formulated milk for infants abundant in the non-protein nitrogen components, thereby to provide the formulated milk for infants analogous to human milk.

Another object of the present invention is to enrich the non-protein nitrogen components thereby to provide the formulated milk for infants analogous to human milk, from which $\beta$-lactoglobulin and/or $\alpha_s$ casein have/has been reduced.

The present invention is directed to a formulated milk composition for infants analogous to human milk obtained by adding a non-protein nitrogen components-containing composition obtained by treating whey.

The present invention is also directed to a formulated milk composition for infants analogous to human milk obtained by adding the non-protein nitrogen components-containing composition obtained by treating whey and the product obtained by reducing $\beta$-lactoglobulin from whey or whey protein concentrate.

The present invention is further directed to a formulated milk composition for infants analogous to human milk obtained by adding the non-protein nitrogen components-containing composition obtained by treating whey, or the non-protein nitrogen components-containing composition obtained by treating whey and the product obtained by reducing $\beta$-lactoglobulin from whey or whey protein concentrate, and a product obtained by reducing $\alpha_s$ casein from bovine milk casein.

The composition of the present invention containing the non-protein nitrogen components can be obtained as the permeate, which comprises treating whey through an ultrafiltration membrane, concentrating the permeate to an appropriate concentration, and crystallizing and separating lactose by filtration. The resulting filtrate is dried preferably by freeze drying, spray drying, etc. Furthermore, the composition containing the non-protein nitrogen components may also be isolated from whey to a high purity by the process described in Japanese Patent Application Laid-Open No. 60-54637.

The product obtained by reducing $\beta$-lactoglobulin from the whey protein concentrate which is used in the present invention can be obtained by dissolving whey or whey protein concentrate in water followed by

EP 0 443 763 B1

various methods including the following known methods: (1) after or without desalting, the solution is brought into contact and reacted with an ion exchanger of carboxymethyl cellulose type at pH of 4.3 to 4.6 to make $\beta$-lactoglobulin adsorbed onto the ion exchanger, whereby the product is obtained as an $\alpha$-lactalbumin-rich fraction (Japanese Patent Application Laid-Open No. 63-39545); (2) after adjusting pH to 3.6 to 5.0, the pH-adjusted solution is heated to 40 to 80°C to thermally aggregate $\alpha$-lactalbumin, whereby the product is obtained as an $\alpha$-lactalbumin-rich fraction (Japanese Patent Application Laid-Open No. 61-268138); (3) the solution is subjected to enzymatic hydrolysis at pH 7.5 to 9.0 and at a temperature of 30 to 38°C, with trypsin, chymotrypsin or a serine protease represented by a protease of Bacillus subtilis origin or a protease of Aspergillus oryzae origin to enzymatically decompose $\beta$-lactoglobulin predominantly; or using Method (1) and Method (2) or (3) in combination.

The product obtained by reducing $\alpha_s$ casein from bovine milk casein which is used in the present invention may be obtained by applying the technique for fractionating $\alpha_s$ casein which comprises using acid casein, sodium casein or rennet casein, etc., adding divalent cations such as calcium, etc. to a casein solution (Japanese Patent Application Laid-Open Nos. 59-91849 and 54-95768, Japanese Patent Publication No. 46-41573).

EXAMPLES

The present invention is described more specifically with reference to the examples below.

Example 1

Rennet whey was treated with a clarifier to separate the remaining casein, which was then treated with a cream separator to separate cream.

The whey was then treated through an ultrafiltration membrane to give the whey permeate and the whey protein concentrate (WPC).

The whey permeate was concentrated to the solid content of 64% under reduced pressure with a concentrating machine. After seeding of lactose, the concentrate was allowed to stand in a refrigerator at 10°C for 2 days. The formed precipitate was removed by decantation.

The resulting whey permeate concentrate was subjected to electric dialysis to remove 95% of the ion components. The composition containing the non-protein nitrogen components was thus obtained.

Next, 17 ℓ of carboxymethyl cellulose ion exchanger was packed in a polyvinyl chloride-made column having a diameter of 45 cm and a height of 50 cm. While stirring, the pH was adjusted to 4.5 with 6N HCl. After WPC obtained by the ultrafiltration treatment described above was dissolved in water in a protein concentration of 0.5 to 1.5%, its pH was adjusted to 4.5 with 6N HCl and the solution was passed through the column at a flow rate of 25 to 30 ℓ/hour.

A ratio of $\alpha$-lactalbumin to $\beta$-lactoglobulin in the eluate through the column was 3.34 : 1. The product abundant in the $\alpha$-lactalbumin content from which $\beta$-lactoglobulin had been reduced could be obtained.

The composition containing the non-protein nitrogen components was mixed with the product obtained by reducing $\beta$-lactoglobulin from WPC. After sterilization in a conventional manner, spray drying was performed to give a raw material suitable for preparing formulated milk for infants rich of the non-protein nitrogen and $\alpha$-lactalbumin.

6

Analytical data of this raw material are shown in Table 2.

Table 2

| | Whey | WPC Solution | | Whey permeate after ultra-filtration | Concentrate from which crystals were separated | Spray dried product |
| | | Before treatment with column | After treatment with column | | | |
|---|---|---|---|---|---|---|
| Protein (%) | 0.60 | 0.5 | 0.16 | 0.05 | 0.29 | 29.09 |
| β-lacto-globulin (%) | 0.42 | 0.36 | 0.03 | 0.04 | 0.20 | 6.70 |
| α-lact-albumin (%) | 0.18 | 0.13 | 0.13 | 0.01 | 0.09 | 22.39 |
| others (%) | 0.20 | 0 | 0 | 0.13 | 2.07 | 7.56 |
| Lactose (%) | 4.49 | 0.08 | 0.08 | 3.41 | 18.81 | 53.32 |
| Ash (%) | 0.50 | 0.01 | 0.01 | 0.37 | 0.68 | 3.08 |
| Total solid (%) | 6.00 | 0.62 | 0.25 | 4.06 | 21.18 | 95.50 |
| Water (%) | 94.00 | 99.38 | 99.75 | 95.94 | 78.82 | 4.50 |

7

Example 2

After WPC obtained in Example 1 was dissolved in water, its pH was adjusted to 4.25 with 6N HCl. The resulting pH-adjusted solution was heated to 60°C in a tank equipped with a stirrer and a jacket heater and kept for an hour.

Then, the WPC solution was cooled to 40°C and separated into the precipitate and the supernatant with a centrifuging machine, Model MRPX-418, manufactured by ALFA-LAVAL Inc. The resulting precipitate was neutralized with 10% NaOH solution to give the product having reduced $\beta$-lactoglobulin from WPC.

The product was mixed with the composition containing the non-protein nitrogen components obtained in Example 1. After sterilization in a conventional manner, spray drying was performed to give a raw material suitable for preparing formulated milk for infants rich of the non-protein nitrogen and $\alpha$-lactalbumin.

Example 3

In a polyvinyl chloride-made column having a diameter of 45 cm and a height of 50 cm was packed 17 $\ell$ of carboxymethyl cellulose ion exchanger. While stirring, the pH was adjusted to 4.5 with 6N HCl.

The whey discharged upon preparation of Gouda cheese was treated with a clarifier to separate the remaining casein, which was then treated with a cream separator to separate cream. After the thus obtained whey was dissolved in water in a protein concentration of 0.5 wt%, its pH was adjusted to 4.5 with 6N HCl and the solution was passed through the column at a flow rate of 25 to 30 $\ell$/hour. The product from which $\beta$-lactoglobulin had been reduced was thus obtained from the whey.

The whey treated with carboxymethyl cellulose showed decrease in $\beta$-lactoglobulin, as shown in Table 3. On the other hand, the whey was rich in non-protein nitrogen, in addition to $\alpha$-lactalbumin and thus suitable for a protein raw material for preparing formulated milk for infants.

Table 3

|  | Whey | Treatment with Column | spray Drying |
|---|---|---|---|
| Protein (%) | 0.55 | 0.18 | 2.19 |
| $\beta$-lactoglobulin (%) | 0.40 | 0.04 | 0.50 |
| $\alpha$-lactalbumin (%) | 0.14 | 0.14 | 1.69 |
| others (%) | 0.04 | 0.04 | 0.73 |
| Lactose (%) | 4.60 | 4.60 | 83.95 |
| Ash (%) | 0.52 | 0.50 | 9.13 |
| Total solid (%) | 5.67 | 5.26 | 96.0 |
| Water (%) | 94.32 | 94.74 | 4.0 |

Example 4

Using each of the raw materials for formulated milk for infants obtained in Examples 1 to 3, its aqueous solution of 1 wt% as the protein was prepared The pH of the solution and its temperature were adjusted to 7 to 9 using 1N NaOH and 37 to 38°C, respectively. Bovine trypsin (Sigma Inc., T-8003) was weighed in an amount of 1 wt% based on the raw protein described above and dissolved in a small quantity of water. The solution was transferred to a sterilized Erlenmeyer's flask through a small-sized sterile filter. The whole quantity was aseptically added to the raw material solution described above. 1N NaOH was added to the mixture with stirring thereby to maintain its pH to 7 to 9 for 4 hours for enzymatic decomposition. At the time when 4 hours lapsed after initiation of the reaction, the enzyme was inactivated by heating treatment and the reaction product was spray dried.

The resulting sample was analyzed by SDS-polyacrylamide gel electrophoresis modified by Laemmli et al. (Laemmli, U.K. 1970, Cleavage of structural proteins during the assembly of the head of bacteriophage T$_4$, Nature 227:680). It was thus confirmed that only $\beta$-lactoglobulin in the raw material described above was predominantly decomposed. This spray dried product further contained abundantly non-protein nitrogen components and $\alpha$-lactalbumin and was thus suitable for protein raw material for formulated milk for infants.

8

Example 5

After 1 kg of lactic acid casein was dispersed in 16 kg of water, 25 g of sodium hydroxide was added to the dispersion. By heating at 85°C for 10 minutes, casein was dissolved therein. A protein concentration in the solution was about 5% and its pH was 7.0.

After the solution was cooled to 4°C in a conventional manner, 250 g of calcium chloride previously dissolved in water was added to the solution. The precipitate was formed and removed with a clarifier. 1N HCl was added to the supernatant to adjust its pH to 4.6 with stirring. The precipitate was formed and collected with a clarifier. After washing with water, the resulting precipitate was pressed, ground into powder and air-dried. The powder contained less $\alpha_s$ casein and was rich mainly in $\beta$ casein and $x$ casein.

After 20 kg of the raw material obtained in Example 1 which was rich in the non-protein nitrogen components and $\alpha$-lactalbumin, 6.4 kg of the casein powder described above, 44.0 kg of lactose, 4.7 kg of soluble polysaccharides which are a starch hydrolyzate composed of mainly polysaccharides of 8 to l2 saccharide chain, and trace amounts of calcium chloride (calcium chloride, calcium lactate, calcium citrate, calcium hydroxide and calcium glycerophosphate may be used alone or in any combination) and water soluble vitamins: riboflavin, cyanocobalamin, calcium pantothenate, nicotinamide and sodium ascorbate were weighed, they were mixed with and dissoved in 525 kg of water. The solution was sterilized by heating in a conventional manner. After, the solution was concentrated to the solid content of 32%, 24.0 kg of a mixture comprising lard, coconut oil, palm oil and soybean oil, the mixture having a fatty acid composition similar to that in human milk and supplemented oil soluble vitamins: vitamin A, vitamin D, dℓ-$\alpha$-tocopherol and lecithine was added to the concentrate, followed by homogenization in a conventional manner. The homogenate was spray dried to give the final product. Analysis of the resulting powder in terms of nitrogen sources revealed that casein protein contained less $\alpha_s$ casein and was composed mainly of $\beta$ case in and $x$ casein, and whey protein contained less $\beta$-lactoglobulin but was abundant in $\alpha$-lactalbumin, and furthermore, the non-protein nitrogen content was high. The product was extremely suitable as formulated milk for infants.

EFFECT OF THE INVENTION

According to the present invention, improvements in the quality of protein were made on conventional formulated milk compositions for infants analogous to human milk. The composition of casein and whey protein can be formulated closely to that of human milk. At the same time, the non-protein nitrogen content which was less in conventional formulated milk for infants can be increased to 60% or more of human milk. Therefore, the protein composition which was not practically realized hitherto can be made close to that of human milk.

**Claims**

1.  A method for producing a formulated milk composition for infants and analogous to human milk, which comprises, mixing together materials known to be suitable for use in a formulated milk composition for infants and, as a material to increase the content of non-protein nitrogen in said formulated milk composition to 60% or more of non-protein nitrogen in human milk, a product containing non-protein nitrogen components which is obtained by treating whey.

2.  A method for producing a formulated milk composition for infants according to claim 1, wherein there is included whey or whey protein concentrate from which $\beta$-lactoglobulin has been at least partially removed.

3.  A method for producing a formulated milk composition for infants according to claim 1, wherein there is included whey or whey protein concentrate from which $\beta$-lactoglobin has been at least partially removed, and a bovine milk casein from which $\alpha_s$ casein has been at least partially removed.

4.  A formulated milk composition for infants and analogous to human milk which is obtainable by the method of anyone of claims 1-3.

**Patentansprüche**

1. Verfahren zur Herstellung einer formulierten Milchzusammensetzung für Kleinkinder und analog der Muttermilch, welches Zusammenmischen von Stoffen umfaßt, die für den Gebrauch in einer formulierten Milchzusammensetzung für Kleinkinder bekannt sind, und einem Nicht-Proteinstickstoff-Bestandteile enthaltenden Produkt als ein Stoff zum Erhöhen des Gehalts an Nicht-Proteinstickstoff in der formulierten Milchzusammensetzung auf 60 % oder mehr Nicht-Proteinstickstoff in Muttermilch, welches durch Behandeln von Molke erhältlich ist.

2. Verfahren zur Herstellung von formulierter Milchzusammensetzung für Kleinkinder nach Anspruch 1, worin Molke oder Molke-Proteinkonzentrat inbegriffen ist, aus welchem $\beta$-Lactoglobulin mindestens teilweise entfernt wird.

3. Verfahren zur Herstellung von formulierter Milchzusammensetzung für Kleinkinder nach Anspruch 1, worin inbegriffen sind, Molke oder Molke-Proteinkonzentrat, aus welchem $\beta$-Lactoglobulin mindestens teilweise entfernt wird, und ein Rindermilchcasein, aus welchem $\alpha_s$-Casein mindestens teilweise entfernt wird.

4. Formulierte Milchzusammensetzung für Kleinkinder und analog der Muttermilch, welche nach dem Verfahren nach einem der Ansprüche 1 - 3 herstellbar ist.

**Revendications**

1. Procédé pour la préparation d'une composition de lait, formulée pour les enfants, et analogue au lait humain, consistant à mélanger ensemble des produits connus comme convenant à l'utilisation dans une composition de lait formulée pour les enfants et, en tant que produit destiné à accroître la teneur en azote non protéinique dans ladite composition de lait, jusqu'à 60 % ou plus d'azote non protéinique de lait humain, d'un produit contenant des composants azotés non protéiniques obtenus par traitement de lactosérum.

2. Procédé pour la préparation d'une composition de lait formulée pour les enfants selon la revendication 1, dans lequel on inclut du lactosérum ou un concentrat de protéines de lactosérum duquel la $\beta$ - lactoglobuline a été au moins partiellement éliminée.

3. Procédé pour la préparation d'une composition de lait formulée pour les enfants selon la revendication 1, dans lequel on inclut du lactosérum ou un concentrat de protéines de lactosérum duquel la $\beta$ - lactoglobuline a été au moins partiellement éliminée et de la caséine de lait de bovin de laquelle la $\alpha_s$ caséine a été au moins partiellement éliminée.

4. Composition de lait formulée pour les enfants et analogue au lait humain, obtenue par le procédé de l'une quelconque des revendications 1 - 3.